# EUROPEAN PATENT SPECIFICATION

(11) **EP 4 223 600 B1**
(45) Date of publication and mention of the grant of the patent: **03.07.2024**
(21) Application number: 22154960.3
(22) Date of filing: 03.02.2022
(51) Int. Cl.: B60T 17/08, F16H 25/20

(54) **SPRING BRAKE ACTUATOR COMPRISING A MECHANICAL RELEASE MECHANISM WITH A RELEASE BOLT AND A SPRING ELEMENT**
FEDERBREMSAKTUATOR MIT EINEM MECHANISCHEN AUSLÖSEMECHANISMUS MIT EINEM AUSLÖSEBOLZEN UND EINEM FEDERELEMENT
ACTIONNEUR DE FREIN À RESSORT COMPRENANT UN MÉCANISME DE LIBÉRATION MÉCANIQUE AVEC UN BOULON DE DÉBRAYAGE ET UN ÉLÉMENT DE RESSORT

(43) Date of publication of application: 09.08.2023
(73) Proprietor: ZF CV Systems Europe BV, 1170 Brüssel (BE)
(72) Inventor: FRANZ, Janusz, 51-152 Wroclaw (PL)
(74) Representative: Ohlendorf, Henrike

(56) References cited:
- DE-A1-102007 041 769
- US-A- 5 636 562

## Description

The invention relates to a spring brake actuator providing particularly a service brake function and a parking brake function and comprising a housing with a housing base and a first housing cover.

A spring brake actuator of this kind is widely used in compressed air brake systems of large vehicles, for example of commercial vehicles like heavy trucks, buses and trailers. The spring brake actuator is operated using compressed air provided by a compressed-air supply container, which is filled by a compressor. The spring brake actuator comprises one or more pressure chambers and at least one diaphragm, which moves a push rod to operate a disc brake of the vehicle, when the pressure chamber is filled with compressed air during a braking action initiated by a respective driver of a vehicle.

The spring brake actuator typically contains a compression spring providing a force for actuating the parking brake function. The compression spring force acts on a parking piston, via which the push rod is actuated. The compression spring can be compressed by a force appearing on the parking piston by applying compressed air in a parking chamber, which is the normal driving state of the vehicle. When the compressed air is released from the parking chamber, then the compression spring expands and shifts the parking piston, which results in the activation of the disc brake and locking of the vehicle. The service brake function can be operated independently in the normal driving state, by applying compressed air in a service chamber of the spring brake actuator.

The parking brake function is combined with an emergency braking function. In case the air pressure of the compressed air brake system of the vehicle is too low, e.g. due to failure, the compression spring expands and pushes the push rod via the parking piston, which results in activation of the disc brake and locking of the vehicle. In case the driver wants to unlock the vehicle, the compression spring can then be compressed by a mechanical release mechanism. The possibility of releasing the disc brake, if sufficient air pressure is not available in the compressed air brake system of the vehicle, belongs to legal requirements.

Double function brake actuators of this kind combining a service brake function with a parking brake function are known, for example, as TRISTOP^{™} brake actuators.

WO 2015/090344 A1 discloses a spring brake actuator providing a service brake function and a spring brake function and comprising a mechanical release mechanism with a release bolt and a spring element according to the preamble of claim 1. The spring element is for example a compression spring made from a steel wire, a conical spring or a spring disc.

WO 2015/172862 A1 discloses a spring brake actuator providing a service brake function and a spring brake function and comprising a compression spring, a parking piston, a spring brake piston and a mechanical release mechanism with a release bolt having a threaded portion. A running nut is engaging the threaded portion, which is adapted to move the spring brake piston against a force of the compression spring. A static nut is fixedly attached at an outside end of the release bolt, which static nut is effective to move the running nut along the threaded portion for unlocking the parking brake function in case of an emergency.

WO 2008/027019 discloses a spring brake actuator comprising a compression spring, a parking piston, a spring brake piston and a mechanical release mechanism with a release bolt, wherein two types of threads having different directions and different sizes are threaded on the release bolt. The release bolt consists of two parts: a first part runs together with a threaded bearing of a boss of the spring brake actuator, and the second part runs together with a running nut inside a cavity of the spring brake piston. DE 10 2007 041769 A1 further describes a spring brake cylinder with emergency release screw, showing a generic (Federmittel) spring below the release nut.

It is an object of the present invention to provide a spring brake actuator having a lower manufacturing cost and a lower weight.

The invention is as set out in the independent claims 1 and 15. Preferred embodiments are defined by the dependent claims.

The spring brake actuator provides particularly a service brake function and a parking brake function and comprises a housing with a housing base and a first housing cover, wherein in the housing a compression spring, a dividing wall and a spring brake piston are arranged, the dividing wall separating a spring chamber, in which the compression spring is located, from a parking chamber. The compression spring is enabled to act on the spring brake piston via the dividing wall to provide the parking brake function, in which case the spring brake piston is shifted by the dividing wall through a hole of the housing base in the direction of a diaphragm, which causes a braking action via a push rod. The spring brake actuator further comprises a mechanical release mechanism with a release bolt and a running nut, wherein the release bolt extends from the outside of the spring brake actuator through a hole of the first housing cover and a hole of the dividing wall into a cavity of the spring brake piston. The running nut is screwed onto a first outside thread of the release bolt and is adapted to move along the release bolt within the spring brake piston upon a rotational movement of the release bolt. The spring brake actuator further comprises a compressible spring element, which is trapped inside the spring brake piston, between the running nut and the spring brake piston, wherein the spring element is a part being manufactured from a non-metallic material or at least partly from a non-metallic material, in particular from a plastic material, e.g. polyamide.

In a preferred embodiment, the spring element includes a compressible cylindrical section having the form of a bellows.

In another preferred embodiment, the spring element is compressible and includes a compressible cylindrical section having a pattern of ribs and holes.

In another preferred embodiment, the spring element comprises or is a compressible cylindrical part made from plastic by a moulding process.

In another preferred embodiment, the spring element comprises at least two materials, a non-metallic and a metallic material, preferably combined or joined together by an over-moulding process.

In another preferred embodiment, the spring element comprises a metallic part being over-moulded by a plastic material.

In another preferred embodiment, the spring element includes at least one section which is asymmetrical.

Advantages of the above embodiments are that they allow for cost optimization and provision of suitable force characteristics. In addition, the described spring elements can easily be manufactured.

In another preferred embodiment, the release bolt comprises a second outside thread, the two threads having an opposite thread orientation, a static nut is fixed on the second outside thread at an outside end of the release bolt, and the spring element is trapped between the running nut and a bottom of the cavity of the spring brake piston.

In another preferred embodiment, the dividing wall, the compression spring and the spring brake piston are located within the housing base and the first housing cover.

In another preferred embodiment, the spring brake actuator comprises a second housing cover, wherein the diaphragm is located within the housing base and the second housing cover between a service chamber and a service brake spring of the spring brake actuator.

In another preferred embodiment, the housing base separates a parking brake part from a service brake part.

In another preferred embodiment, the dividing wall is a parking piston or a second diaphragm.

In another preferred embodiment, the spring brake actuator is a TRISTOP^{™} brake actuator or a double diaphragm spring brake actuator.

In another preferred embodiment, the spring brake actuator is a component of a compressed air brake system of a vehicle.

The invention further defines a utility vehicle comprising a respective spring brake actuator.

Preferred embodiments of the invention are explained in more detail below by way of example with reference to schematic drawings, which show:
- Fig. 1: a spring brake actuator providing a service brake function and a parking brake function and comprising a mechanical release mechanism with a spring element;
- Fig. 2: the spring element of Fig. 1 in an enlarged view;
- Fig. 3: a second preferred embodiment of the spring element;
- Fig. 4: a detail of the spring brake actuator with the mechanical release mechanism of Fig. 1 in an enlarged view;
- Fig. 5: a detail of the spring element, a release bolt, a parking piston and a spring brake piston of the spring brake actuator of Fig. 1; and
- Fig. 6: a spring element according to prior art.

The present description illustrates the principles of the present invention. It will thus be appreciated that those skilled in the art will be able to devise various arrangements that, although not explicitly described or shown herein, embody the principles of the invention and are included within its scope, which is defined in the appended claims.

All examples and conditional language recited herein are intended for instructional purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof.

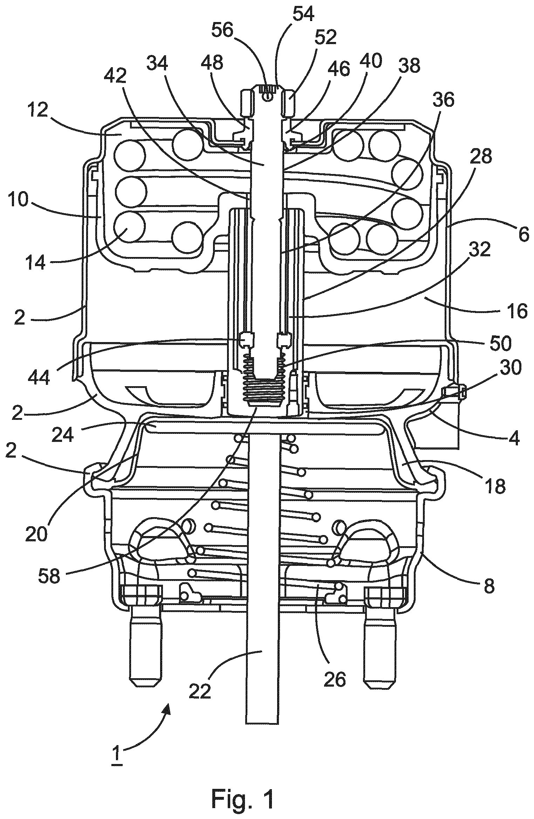

In Fig. 1 a spring brake actuator 1 is schematically depicted in a cross-sectional view, comprising a housing 2 with a housing base 4, a first cylindrical housing cover 6 and a second cylindrical housing cover 8. Within the housing base 4 and the first housing cover 6, a parking piston 10 is provided. The parking piston 10 separates a spring chamber 12, in which a compression spring 14 is located, from a parking chamber 16. The compression spring 14 acts on the parking piston 10 and tries to push the parking piston 10 in the direction of the housing base 4. When the parking chamber 16 is filled with compressed air, the parking piston 10 is moved into the direction of the compression spring 14, compressing the compression spring 14. When the compressed air is released from the parking chamber 16, then the compression spring 10 shifts the parking piston 10 in the direction of the parking chamber 16.

Within the housing base 4 and the second housing cover 8, a diaphragm 20 is provided, which is located between a service chamber 18 and a service brake spring 26. The diaphragm 20 is enabled to shift a push rod 22 via a push rod plate 24 for providing a braking action. The push rod 22 is coupled, for example, with a disc brake, not shown in Fig. 1, and in case the service chamber 18 is filled with compressed air, the diaphragm 20 moves the push rod 22 via the push rod plate 24, which actuates the disc brake and compresses the service brake spring 26. When the compressed air is released from the service chamber 18, then the service brake spring 26 pushes the diaphragm 20 back, which releases the disc brake.

The compression spring 14 is in this embodiment a compressible cylindrical power spring and rests with one side at the first housing cover 6 and with its other side at the parking piston 10. The parking piston 10 acts on a spring brake piston 28, and when the compression spring 14 shifts the parking piston 10, the spring brake piston 28 is moved by the parking piston 10 through a hole 30 of the housing base 4 in the direction of the diaphragm 20, which results in a movement of the diaphragm 20 and the push rod plate 24 in the direction of the service brake spring 26, providing a braking action via the push rod 22.

The spring brake piston 28 is hollow like a tube, having a cavity 32. The spring brake actuator 1 further comprises a mechanical release mechanism with a release bolt 34 having a thinner part with a first outside thread 36 and a thicker part with a second outside thread 38. The threads 36 and 38 have in particular an opposite thread orientation. The release bolt 34 extends from the outside of the spring brake actuator 1 through a hole 40 of the first housing cover 6 and a hole 42 of the parking piston 10 into the cavity 32 of the spring brake piston 28. A running nut 44 is screwed onto the first thread 36 of the release bolt 34 and adapted to move along the first thread 36 upon a rotational movement of the release bolt 34, inside the cavity 32 of the spring brake piston 28. The spring brake piston 28 accordingly has a guiding means for guiding the running nut 44 such that the running nut 44 cannot rotate within the spring brake piston 28.

The release bolt 34 is screwed with its second thread 38 into a boss 46, which is fixed within the hole 40 of the first housing cover 6. The boss 46 has a protrusion 48 which comprises a hollow inner cylindrical portion with an internal thread, which carries the release bolt 34 via the second thread 38 of the release bolt 34. The spring brake actuator 1 further comprises a static nut 52, which is screwed on the release bolt 34 at an outside end 54 of the release bolt 34, on the second thread 38, and is fixedly attached on the release bolt 34 by means of a share pin 56.

The spring brake actuator 1 is usable in particular for a large vehicle, for example for a commercial vehicle. The spring brake actuator 1 provides a service brake function and a spring brake function and operates as follows: When the vehicle is running, the parking chamber 16 is filled with compressed air, but not the service chamber 18, so that the disc brake of the vehicle is not effective. Any braking action of the vehicle can then be provided by a driver of the vehicle via a brake pedal, which, when pushed, results in filling the service chamber 18 with compressed air. The diaphragm 20 then moves the push rod plate 24 in the direction of the service brake spring 26, which shifts the push rod 22 and activates the disc brake. The braking action ends when the driver releases the brake pedal, which causes the compressed air to be released from the service chamber 18 with the effect that the push rod 22, the push rod plate 24 and the diaphragm 20 are shifted back by the service brake spring 26, which unlocks the disc brake. Fig. 1 depicts the spring brake actuator 1 in a driving position.

When the vehicle is stopped and its engine is switched off, the driver can release the compressed air from the parking chamber 16 to lock the disc brake. The compression spring 14 then expands and as a result, it shifts the spring brake piston 28 via the parking piston 10 in the direction of the diaphragm 20, which moves the diaphragm 20 in the direction of the service brake spring 26 causing the activation of the disc brake and locking of the vehicle. When the engine of the vehicle is switched on again, the disc brake can be unlocked by the driver by filling the parking chamber 16 with compressed air, which effects that the parking piston 10 is pushed back, until the compression spring 14 is fully compressed. The disc brake is then released and the vehicle is ready for driving.

In case of an emergency, for example when the engine of the vehicle is broken and does not start, correspondingly, the vehicle cannot be moved, because no compressed air is available to unlock the disc brake by the spring brake actuator 1. Then, the release mechanism has to be used to unlock the parking function of the spring brake actuator 1. Using a release tool, a person can turn the release bolt 34 via the static nut 52 to move the parking piston 10 by means of the spring brake piston 28 and the running nut 44 in the direction of the compression spring 14, until the compression spring 14 is completely compressed, which results in unlocking of the spring brake actuator 1, and correspondingly of the disc brake. This release mechanism is a legal requirement for the spring brake actuator 1.

To support the assembly of the release bolt 34 in the spring brake actuator 1, a spring element 50 is used, which is trapped between the running nut 44 and a bottom 58 of the cavity 32 of the spring brake piston 28, and which spring element 50 produces a tension force on the spring brake piston 28 via the running nut 44. The spring element 50 butts against the running nut 44 while the release bolt 34 is screwed into the running nut 44.

The spring element 50 is in particular hollow and cylindrical and is made from a non-metallic material or at least partly from a non-metallic material, for example, from a plastic material. The advantage of this design of the spring element 50 is a lower cost, a lower weight and no requirement for a surface protection in comparison to a spring element made of a metallic material, for example a compression spring made of a spring steel wire.

The spring element 50 assists the assembly of the release bolt 34 into the spring brake actuator 1 without a need of reorientation of the release bolt 34. The spring element 50 inside the release bolt 34 is needed in order to avoid any additional reorientation of the spring brake actuator 1 during the assembly process, when screwing the release bolt 34 into the running nut 44. The running nut 44 has to be positioned in the spring brake actuator 1 before the parking piston 10. Any reorientation during the assembly would cause a gravity force acting on the running nut 44. The gravity force is replaced by a force of the spring element 50, resulting in less manual operations during the assembly of the release bolt 34.

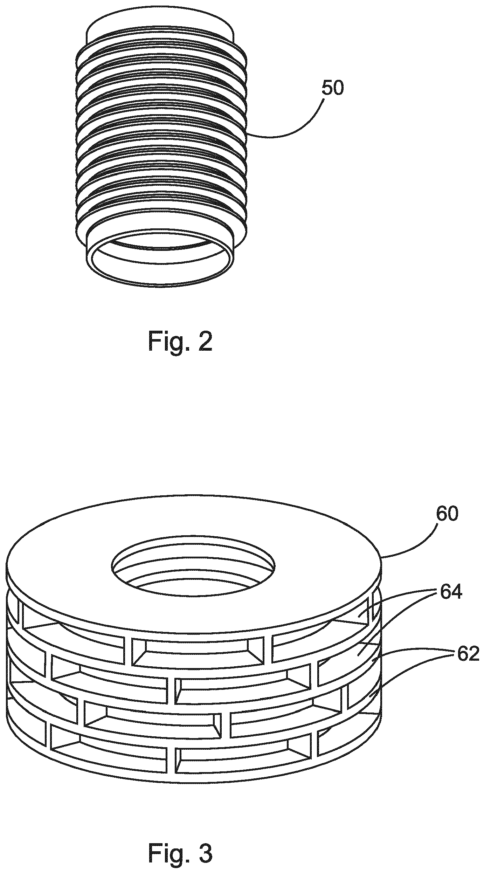

In a preferred embodiment, the spring element 50 is cylindrical and hollow or at least partly hollow and has a form of a bellows, as depicted in more detail in Fig. 2. Due to the form of a bellows, the spring element 50 is compressible, like a compressible steel wire spring according to prior art. The spring element 50 is manufactured in a preferred embodiment from a plastic material by a moulding process.

In another preferred embodiment, the spring element is a cylindrical spring element 60 comprising a section made of plastic and having a pattern of ribs 62 and holes 64, which section constitutes a cylindrical wall or at least an essential part of a cylindrical wall of the spring element 60, as depicted in Fig. 3. The spring element 60 is hollow or at least partly hollow. The ribs 62 have a small width, in comparison with the openings of the holes 64, so that the spring element 60 is compressible, comparable to a compression spring. The spring element 60 can be manufactured for example by a moulding process from a plastic material.

In another preferred embodiment, the spring element consists of at least two materials, a metallic and a non-metallic material, which are combined or joined together by a coating process or an over-moulding process of the metallic material with the plastic material.

In another preferred embodiment, the spring element comprises at least one section which is asymmetrical.

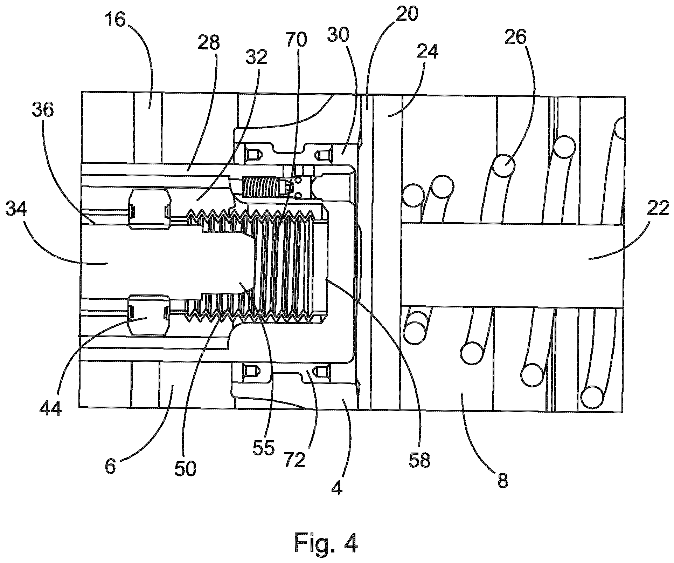

In Fig. 4, basic elements of the spring brake actuator 1, as depicted Fig. 1, are shown in a closer view. The spring element 50 rests inside the spring brake piston 28, between the running nut 44 and the bottom 58 of the spring brake piston 28. The release bolt 34 extends partly, with a second end 55, into a hollow 70 of the spring element 50, after the assembly of the release bolt 34. A sealing 72 is provided between the walls of the hole 30 of the housing base 4 and the spring brake piston 28 to prevent a pressure equalisation between the parking chamber 16 and the service chamber 18.

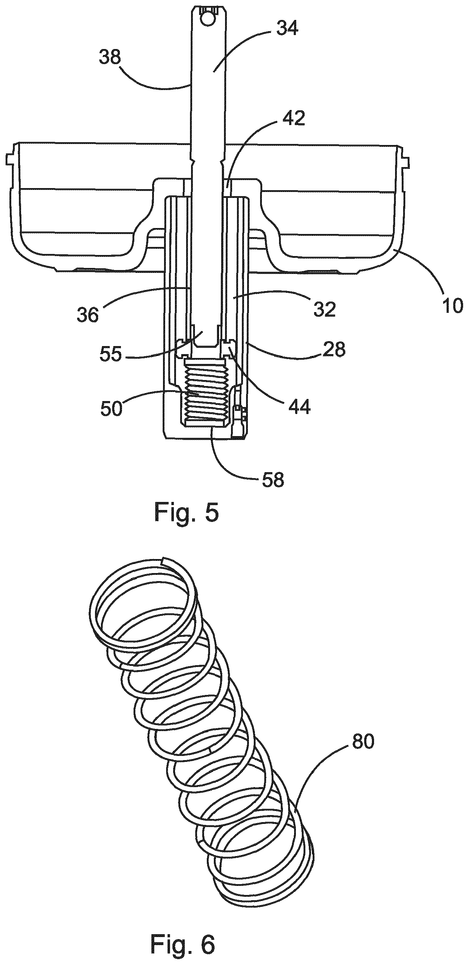

Fig. 5 schematically depicts how the spring element 50 supports the running nut 44 during the assembly of the release bolt 34 into the running nut 44. The function of the spring element 50 is to deliver a counter reaction force to the running nut 44 when the running nut 44 is pushed downwards by the release bolt 34 during the assembly, so that the end 55 of the release bolt 34 can be screwed easily into the running nut 44.

The spring brake actuator 1 is a piston type brake actuator, wherein the parking piston 10 has the function of a dividing wall, separating the spring chamber 12 from the parking chamber 16. In another preferred embodiment, the spring brake actuator comprises a second diaphragm instead of the parking piston 10, wherein the second diaphragm provides a similar function as the parking piston 10. A spring brake actuator of this kind is known particularly as a double diaphragm spring brake actuator.

A spring element 80 according to prior art, being manufactured from a metallic material, is shown in Fig. 6. The spring element 80 is a helical compression spring, preferably made from a spring steel wire.

Also other embodiments may be utilized by one skilled in the art without departing from the scope of the present invention. The invention resides therefore in the claims herein after appended.

### List of Reference signs (part of the description)

- 1: spring brake actuator
- 2: housing
- 4: housing base
- 6: first housing cover
- 8: second housing cover
- 10: parking piston
- 12: spring chamber
- 14: compression spring
- 16: parking chamber
- 18: service chamber
- 20: diaphragm
- 22: push rod
- 24: push rod plate
- 26: service brake spring
- 28: spring brake piston
- 30: hole of the housing base
- 32: cavity
- 34: release bolt
- 36, 38: threaded portions of the release bolt
- 40: hole of the first housing cover
- 42: hole of the parking piston
- 44: running nut
- 46: boss
- 48: protrusion
- 50: spring element
- 52: static nut
- 54, 55: ends of the release bolt 34
- 56: share pin
- 58: bottom
- 60: spring element
- 62: rips
- 64: holes
- 70: hollow
- 72: sealing
- 80: spring element according to prior art

## Claims

1. Spring brake actuator (1), providing particularly a service brake function and a parking brake function and comprising a housing (2) with a housing base (4) and a first housing cover (6), wherein
in the housing (2) a compression spring (14), a dividing wall (10) and a spring brake piston (28) are arranged, the dividing wall (10) separating a spring chamber (12), in which the compression spring (14) is located, from a parking chamber (16),
the compression spring (14) is enabled to act on the spring brake piston (28) via the dividing wall (10) to provide the parking brake function, in which case the spring brake piston (28) is shifted by the dividing wall (10) through a hole (30) of the housing base (6) in the direction of a diaphragm (20) causing a braking action via a push rod (22),
the spring brake actuator (1) comprises further a mechanical release mechanism with a release bolt (34) and a running nut (44), the release bolt (34) extending from the outside of the spring brake actuator (1) through a hole (40) of the first housing cover (6) and a hole (42) of the dividing wall (10) into a cavity (32) of the spring brake piston (28), and the running nut (44) being screwed onto a first outside thread (36) of the release bolt (34) and being adapted to move along the release bolt (34) within the spring brake piston (28) upon a rotational movement of the release bolt (34),
and wherein a compressible spring element (50, 60) is provided, which is trapped inside the spring brake piston (28), between the running nut (44) and the spring brake piston (28), **characterized in that**
the compressible spring element (50, 60) is a part being manufactured from a non-metallic material or at least partly from a non-metallic material, in particular from a plastic material.

2. The spring brake actuator (1) of claim 1, wherein the spring element (50) includes a compressible cylindrical section having the form of a bellows.

3. The spring brake actuator (1) of claim 1, wherein the spring element (60) includes a compressible cylindrical section having a pattern of ribs and holes.

4. The spring brake actuator (1) of one of claims 1 to 3, wherein the spring element (50, 60) comprises or is a compressible cylindrical part made from plastic by a moulding process.

5. The spring brake actuator (1) of one of claims 1 to 3, wherein the spring element (50) comprises at least two materials, a non-metallic and a metallic material, preferably combined or joined together by an over-moulding process.

6. The spring brake actuator (1) of one of claims 1 to 3, wherein the spring element (50) comprises a metallic part being over-moulded by a plastic material.

7. The spring brake actuator (1) of one of the preceding claims, wherein the spring element (50, 60) includes at least one section which is asymmetrical.

8. The spring brake actuator (1) of one of the preceding claims, wherein the release bolt (34) comprises a second outside thread (38), the two threads (36, 38) having an opposite thread orientation, a static nut (52) is fixed on the second outside thread (38) at an outside end (54) of the release bolt (34), and wherein the spring element (50, 60) is trapped between the running nut (44) and a bottom (58) of the cavity (32) of the spring brake piston (28).

9. The spring brake actuator (1) of one of the preceding claims, wherein the dividing wall (10), the compression spring (14) and the spring brake piston (28) are located within the housing base (4) and the first housing cover (6).

10. The spring brake actuator (1) of one of the preceding claims, comprising a second housing cover (8), wherein the diaphragm (20) is located within the housing base (4) and the second housing cover (8) between a service chamber (18) and a service brake spring (26) of the spring brake actuator (1).

11. The spring brake actuator (1) of one of the preceding claims, wherein the housing base (4) separates a parking brake part from a service brake part.

12. The spring brake actuator (1) of one of the preceding claims, wherein the dividing wall (10) is a parking piston (10) or a second diaphragm.

13. The spring brake actuator (1) of claim 12, wherein the spring brake actuator (1) is a TRISTOP^{™} brake actuator or a double diaphragm spring brake actuator.

14. The spring brake actuator (1) of one of the preceding claims, wherein the spring brake actuator (1) is a component of a compressed air brake system of a commercial vehicle.

15. Commercial vehicle comprising a spring brake actuator (1) according to one of the preceding claims.

## Patentansprüche

1. Federspeicherbremszylinder (1), der insbesondere eine Betriebsbremsfunktion und eine Feststellbremsfunktion bereitstellt und umfassend ein Gehäuse (2) mit einer Gehäusebasis (4) und einer ersten Gehäuseabdeckung (6), wobei
in dem Gehäuse (2) eine Druckfeder (14), eine Trennwand (10) und ein Federspeicherbremskolben (28) angeordnet sind, wobei die Trennwand (10) eine Federkammer (12), in der sich die Druckfeder (14) befindet, von einer Feststellkammer (16) trennt,
die Druckfeder (14) in die Lage versetzt wird, auf den Federspeicherbremskolben (28) über die Trennwand (10) einzuwirken, um die Feststellbremsfunktion bereitzustellen, wobei in diesem Fall der Federspeicherbremskolben (28) durch die Trennwand (10) durch ein Loch (30) der Gehäusebasis (6) in Richtung einer Membran (20) verschoben wird, wobei eine Bremswirkung über eine Schubstange (22) bewirkt wird,
der Federspeicherbremszylinder (1) ferner einen mechanischen Lösemechanismus mit einem Lösebolzen (34) und einer Laufmutter (44) umfasst, wobei sich der Lösebolzen (34) von der Außenseite des Federspeicherbremszylinders (1) durch ein Loch (40) der ersten Gehäuseabdeckung (6) und ein Loch (42) der Trennwand (10) in einen Hohlraum (32) des Federspeicherbremskolbens (28) erstreckt, und die Laufmutter (44) auf ein erstes Außengewinde (36) des Lösebolzens (34) geschraubt ist und geeignet ist, sich entlang des Lösebolzens (34) innerhalb des Federspeicherbremskolbens (28) bei einer Drehbewegung des Lösebolzens (34) zu bewegen,
und wobei ein Druckfederelement (50, 60) bereitgestellt ist, das im Inneren des Federspeicherbremskolbens (28) zwischen der Laufmutter (44) und dem Federspeicherbremskolben (28) eingeklemmt ist, **dadurch gekennzeichnet, dass**
das Druckfederelement (50, 60) ein Teil ist, das aus einem nichtmetallischen Material oder mindestens teilweise aus einem nichtmetallischen Material, insbesondere aus einem Kunststoffmaterial gefertigt ist.

2. Federspeicherbremszylinder (1) nach Anspruch 1, wobei das Federelement (50) einen komprimierbaren zylindrischen Bereich einschließt, der die Form eines Balgs aufweist.

3. Federspeicherbremszylinder (1) nach Anspruch 1, wobei das Federelement (60) einen komprimierbaren zylindrischen Bereich einschließt, der ein Muster aus Rippen und Löchern aufweist.

4. Federspeicherbremszylinder (1) nach einem der Ansprüche 1 bis 3, wobei das Federelement (50, 60) ein komprimierbares zylindrisches Teil umfasst oder ist, das durch ein Formverfahren aus Kunststoff hergestellt ist.

5. Federspeicherbremszylinder (1) nach einem der Ansprüche 1 bis 3, wobei das Federelement (50) mindestens zwei Materialien, ein nichtmetallisches und ein metallisches Material, die vorzugsweise durch ein Umspritzverfahren kombiniert oder miteinander verbunden sind, umfasst.

6. Federspeicherbremszylinder (1) nach einem der Ansprüche 1 bis 3, wobei das Federelement (50) ein Metallteil, das mit einem Kunststoffmaterial umspritzt ist, umfasst.

7. Federspeicherbremszylinder (1) nach einem der vorstehenden Ansprüche, wobei das Federelement (50, 60) mindestens einen Bereich einschließt, der asymmetrisch ist.

8. Federspeicherbremszylinder (1) nach einem der vorstehenden Ansprüche, wobei der Lösebolzen (34) ein zweites Außengewinde (38) umfasst, wobei die zwei Gewinde (36, 38) eine entgegengesetzte Gewindeausrichtung aufweisen, wobei eine statische Mutter (52) an dem zweiten Außengewinde (38) an einem äußeren Ende (54) des Lösebolzens (34) befestigt ist, und wobei das Federelement (50, 60) zwischen der Laufmutter (44) und einem Boden (58) des Hohlraums (32) des Federspeicherbremskolbens (28) eingeklemmt ist.

9. Federspeicherbremszylinder (1) nach einem der vorstehenden Ansprüche, wobei sich die Trennwand (10), die Druckfeder (14) und der Federspeicherbremskolben (28) innerhalb der Gehäusebasis (4) und der ersten Gehäuseabdeckung (6) befinden.

10. Federspeicherbremszylinder (1) nach einem der vorstehenden Ansprüche, umfassend eine zweite Gehäuseabdeckung (8), wobei sich die Membran (20) innerhalb der Gehäusebasis (4) und der zweiten Gehäuseabdeckung (8) zwischen einer Betriebskammer (18) und einer Betriebsbremsfeder (26) des Federspeicherbremszylinders (1) befindet.

11. Federspeicherbremszylinder (1) nach einem der vorstehenden Ansprüche, wobei die Gehäusebasis (4) einen Feststellbremsteil von einem Betriebsbremsteil trennt.

12. Federspeicherbremszylinder (1) nach einem der vorstehenden Ansprüche, wobei die Trennwand (10) ein Feststellkolben (10) oder eine zweite Membran ist.

13. Federspeicherbremszylinder (1) nach Anspruch 12, wobei der Federspeicherbremszylinder (1) ein TRISTOP^{™}-Bremszylinder oder ein Doppelmembran-Federspeicherbremszylinder ist.

14. Federspeicherbremszylinder (1) nach einem der vorstehenden Ansprüche, wobei der Federspeicherbremszylinder (1) ein Bestandteil einer Druckluftbremsanlage eines Nutzfahrzeugs ist.

15. Nutzfahrzeug, umfassend einen Federspeicherbremszylinder (1) nach einem der vorstehenden Ansprüche.

## Revendications

1. Actionneur de frein à ressort (1), fournissant en particulier une fonction de frein de service et une fonction de frein de stationnement et comprenant un boîtier (2) avec une base de boîtier (4) et un premier couvercle de boîtier (6), dans lequel
dans le boîtier (2) sont disposés un ressort de compression (14), une paroi de séparation (10) et un piston de frein à ressort (28), la paroi de séparation (10) séparant une chambre à ressort (12), dans laquelle se trouve le ressort de compression (14), d'une chambre de stationnement (16),
le ressort de compression (14) est capable d'agir sur le piston de frein à ressort (28) par l'intermédiaire de la paroi de séparation (10) pour assurer la fonction de frein de stationnement, auquel cas le piston de frein à ressort (28) est déplacé par la paroi de séparation (10) à travers un trou (30) de la base de boîtier (6) en direction d'un diaphragme (20) provoquant une action de freinage par l'intermédiaire d'une tige de poussée (22),
l'actionneur de frein à ressort (1) comprend en outre un mécanisme de déblocage mécanique avec un boulon de déblocage (34) et un écrou de roulement (44), le boulon de déblocage (34) s'étendant à partir de l'extérieur de l'actionneur de frein à ressort (1) à travers un trou (40) du premier couvercle de boîtier (6) et un trou (42) de la paroi de séparation (10) dans une cavité (32) du piston de frein à ressort (28), et l'écrou de roulement (44) étant vissé sur un premier filetage extérieur (36) du boulon de déblocage (34) et étant adapté à se déplacer le long du boulon de déblocage (34) à l'intérieur du piston de frein à ressort (28) lors d'un mouvement de rotation du boulon de déblocage (34),
et dans lequel un élément de ressort compressible (50, 60) est pourvu, qui est coincé à l'intérieur du piston de frein à ressort (28), entre l'écrou de roulement (44) et le piston de frein à ressort (28), **caractérisé en ce que**
l'élément de ressort compressible (50, 60) est une pièce fabriquée d'un matériau non métallique ou au moins partiellement d'un matériau non métallique, en particulier d'un matériau plastique.

2. Actionneur de frein à ressort (1) selon la revendication 1, dans lequel l'élément de ressort (50) comporte une section cylindrique compressible ayant la forme d'un soufflet.

3. Actionneur de frein à ressort (1) selon la revendication 1, dans lequel l'élément de ressort (60) comporte une section cylindrique compressible ayant un motif de nervures et de trous.

4. Actionneur de frein à ressort (1) selon l'une des revendications 1 à 3, dans lequel l'élément de ressort (50, 60) comprend ou est une pièce cylindrique compressible fabriquée en plastique par un processus de moulage.

5. Actionneur de frein à ressort (1) selon l'une des revendications 1 à 3, dans lequel l'élément de ressort (50) comprend au moins deux matériaux, un matériau non métallique et un matériau métallique, de préférence combinés ou assemblés par un processus de surmoulage.

6. Actionneur de frein à ressort (1) selon l'une des revendications 1 à 3, dans lequel l'élément de ressort (50) comprend une pièce métallique surmoulée d'une matière plastique.

7. Actionneur de frein à ressort (1) selon l'une des revendications précédentes, dans lequel l'élément de ressort (50, 60) comporte au moins une section qui est asymétrique.

8. Actionneur de frein à ressort (1) selon l'une des revendications précédentes, dans lequel le boulon de déblocage (34) comprend un second filetage extérieur (38), les deux filetages (36, 38) ayant une orientation de filetage opposée, un écrou statique (52) est fixé sur le second filetage extérieur (38) au niveau d'une extrémité extérieure (54) du boulon de déblocage (34), et dans lequel l'élément de ressort (50, 60) est coincé entre l'écrou de roulement (44) et un fond (58) de la cavité (32) du piston de frein à ressort (28).

9. Actionneur de frein à ressort (1) selon l'une des revendications précédentes, dans lequel la paroi de séparation (10), le ressort de compression (14) et le piston de frein à ressort (28) sont situés à l'intérieur de la base de boîtier (4) et du premier couvercle de boîtier (6).

10. Actionneur de frein à ressort (1) selon l'une des revendications précédentes, comprenant un second couvercle de boîtier (8), dans lequel le diaphragme (20) est situé à l'intérieur de la base de boîtier (4) et le second couvercle de boîtier (8) entre une chambre de service (18) et un ressort de frein de service (26) de l'actionneur de frein à ressort (1).

11. Actionneur de frein à ressort (1) selon l'une des revendications précédentes, dans lequel la base de boîtier (4) sépare une partie de frein de stationnement d'une partie de frein de service.

12. Actionneur de frein à ressort (1) selon l'une des revendications précédentes, dans lequel la paroi de séparation (10) est un piston de stationnement (10) ou un second diaphragme.

13. Actionneur de frein à ressort (1) selon la revendication 12, dans lequel l'actionneur de frein à ressort (1) est un actionneur de frein TRISTOP^{™} ou un actionneur de frein à ressort à double diaphragme.

14. Actionneur de frein à ressort (1) selon l'une des revendications précédentes, dans lequel l'actionneur de frein à ressort (1) est un composant d'un système de freinage à air comprimé d'un véhicule utilitaire.

15. Véhicule utilitaire comprenant un actionneur de frein à ressort (1) selon l'une des revendications précédentes.
